# EUROPEAN PATENT APPLICATION

(11) **EP 4 741 467 A1**
(43) Date of publication of application: **13.05.2026**
(21) Application number: 24211416.3
(22) Date of filing: 07.11.2024
(51) Int. Cl.: C09J 123/02, C09J 175/04, C09J 5/06, C09J 153/02

(54) **A HOT-MELT ADHESIVE HAVING IMPROVED HEAT STABILITY**

(71) Applicant: Sika Technology AG, 6340 Baar (CH)
(72) Inventor: TEPELMANN, Weng, 22525 Hamburg (DE)
(74) Representative: Sika Patent Attorneys

(57) **Abstract**

The invention relates to an adhesive composition comprising:
a) At least one polymer P,
b) A stabilizer S comprising
b1) At least one first stabilizer S1 and
b2) At least one second stabilizer S2, which is different from the at least one stabilizer S1

wherein the first stabilizer S1 is a non-sulfur containing compound having at least two phenolic groups and the second stabilizer S2 is a sulfur containing compound.

## Description

### Technical field

The invention relates to hot-melt adhesives having improved heat stability and to use of such adhesives as an assembly adhesive, a laminating adhesive, or as an adhesive for the building of sandwich elements, particularly in automotive industry.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Hot-melt adhesives also include pressure sensitive adhesives (HM-PSA), which are permanently tacky adhesives that are applied as a melt. Non-reactive hot-melt and hot-melt PSA adhesives typically contain a basic polymer matrix comprising amorphous polyolefins, particularly poly-α-olefins or thermoplastic elastomers (TPE), especially styrene block copolymers, and additives, such as tackifying resins, waxes and/or liquid polyolefin resins.

Reactive hot-melt adhesives contain polymers with reactive groups that enable chemical curing of the adhesive, for example, by crosslinking of the polymer chains. Due to the chemically cured polymer matrix reactive hot-melt adhesives do not soften upon heating and these adhesives are, therefore, suitable for use also at elevated temperatures. The chemical curing of the polymers can be initiated, for example, by heating or exposing the adhesive composition to water, such as atmospheric moisture. Moisture curing hot-melt adhesives typically contain polymers, for example, polyolefins or polyurethane polymers, which are functionalized with isocyanate or silane groups that enable crosslinking of the polymer chains upon contact with atmospheric moisture.

Moisture curing polyurethane hot-melt (PUR-RHM) adhesives consist mainly of isocyanate-functional polyurethane polymers, which have been obtained by reacting suitable polyols, typically polyester and/or polyether polyols, with polyisocyanates, where the reaction is conducted at a molar excess of isocyanate (NCO) groups over hydroxyl (OH) groups. The adhesive composition is cured by reaction of the residual isocyanate groups with water, which results in various chain extension and/or crosslinking reactions of the polymers. A fully cured polyurethane hot-melt adhesive comprises urea and/or urethane bonds and, depending on the starting materials used for providing the isocyanate-functional polymer, ester and/or ether bonds.

The reactive polyolefin-based hot-melt adhesives are typically one-component moisture curable compositions containing as the main polymer component silane-functionalized poly-α-olefins, such as silane grafted poly-α-olefins. Such silane-functionalized poly-α-olefins can be obtained, for example, in a process comprising grafting an olefinically unsaturated alkoxysilanes to poly-α-olefins in the presence of a free-radical initiator, such as peroxide. Silane-functionalized poly-α-olefins are commercially available from various suppliers. The crosslinking of the silane grafted poly-α-olefin is accomplished by hydrolyzing the alkoxy silane groups by water followed by dehydrocondensation of the silanol groups, resulting in release of methanol and water.

A general disadvantage of both reactive and non-reactive hot-melt adhesives is that non-cured adhesive compositions have relatively low thermal stability, which limits their use in high temperature applications. One example of such applications is a roller coating process, where the adhesive composition may remain for several minutes in a molten state before being placed between the coating rolls to be applied on a surface of a substrate. In case of insufficient thermal stability, the viscosity of the adhesive may increase to a level, which eventually prevents the application with the rolls. Furthermore, adhesives exhibiting a low thermal stability may change their color from clear to yellow and/or exhibit "angel hairs" and/or "black stains" when stored at high temperatures. Such behavior typically results from degradation of the polymeric constituents of the adhesive and/or from unwanted chemical reactions induced by the application of thermal energy. Changes in appearance of the non-cured or cured adhesive are typically not acceptable, even though they would not have any effect on the performance related properties of the adhesive.

It is well known that thermal stability of hot-melt adhesives can be improved by using specific antioxidants, also known as heat stabilizers, such as sterically hindered phenolic antioxidants. These are commercially available from various providers, for example, under the trade name of Irganox^{®}, Tinuvin^{®}, and Irgafos^{®} (all from BASF). However, in many cases the use of common antioxidants results only in minor improvement of thermal stability of the adhesive. In fact, many commercially available moisture-curing hot-melt adhesives used today in industrial applications have been found out exhibit non-optimal thermal stability properties.

There is thus a need for a hot-melt adhesive having improved thermal stability. Such adhesives are especially suitable for use in roller coating and other demanding industrial application processes.

### Brief description of the figures

Fig. 1 shows a relative change in viscosity of a commercially available non-reactive hot-melt adhesive SikaMelt-230 with and without a stabilizer S during a storage period of 16 minutes at a temperature of 190 °C.
Fig. 2 shows a relative change in viscosity of a commercially available non-reactive hot-melt adhesive SikaMelt-285 with and without a stabilizer package S during a storage period of 16 minutes at a temperature of 190 °C.

### Summary of the invention

The object of the present invention is to provide an adhesive composition, which overcomes or at least mitigates the disadvantages of the prior art adhesives as discussed above.

Particularly, it is an object of the present invention to provide an adhesive composition exhibiting an improved thermal stability in its non-cured state.

It was surprisingly found out that the object can be achieved with the features of claim 1.

Especially, it was found out that the thermal stability of an adhesive composition can be significantly improved by using a specific combination of a first stabilizer being a non-sulfur containing compound having at least two phenolic groups and a second sulfur containing compound.

Specifically, according to the invention, an adhesive composition is proposed, the composition comprising:
a) At least one polymer **P,**
b) A stabilizer **S** comprising
   b1) At least one first stabilizer **S1** and
   b2) At least one second stabilizer **S2,**
wherein the first stabilizer **S1** is a non-sulfur containing compound having at least two phenolic groups and the second stabilizer **S2** is a sulfur containing compound.

As it turned out, the proposed adhesive compositions are especially suitable for use in roller coating and other demanding industrial application processes, where the adhesive is subjected to high temperatures for prolonged period of time before being applied on a surface of a substrate.

Additional aspects of the present invention are defined in further independent claims. Particularly preferred embodiments are outlined throughout the description and the dependent claims.

### Detailed description of the invention

The subject of the present invention is an adhesive composition comprising:
a) At least one polymer **P,**
b) A stabilizer **S** comprising
   b1) At least one first stabilizer **S1** and
   b2) At least one second stabilizer **S2,**
wherein the first stabilizer **S1** is a non-sulfur containing compound having at least two phenolic groups and the second stabilizer **S2** is a sulfur containing compound.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" designates a collective of chemically uniform macromolecules produced by a polyreaction (polymerization, polyaddition, polycondensation) where the macromolecules differ with respect to their degree of polymerization, molecular weight, and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The term "molecular weight" refers to the molar mass (g/mol) of a molecule or a part of a molecule, also referred to as "moiety". The term "average molecular weight" refers to number average molecular weight (Mₙ) or to weight average molecular weight (M_{w}) of an oligomeric or polymeric mixture of molecules or moieties. The molecular weight may be determined by gel permeation chromatography (GPC) using polystyrene as standard, styrene-divinylbenzene gel with porosity of 100 Angstrom, 1000 Angstrom and 10000 Angstrom as the column and, depending on the molecule, tetrahydrofurane as a solvent, at 35°C, or 1 ,2,4-trichlorobenzene as a solvent, at 160 °C.

The term "average OH-functionality" designates the average number of hydroxyl (OH) groups per molecule. The average OH-functionality of a compound can be calculated based on the number average molecular weight (Mₙ) and the hydroxyl number of the compound.

The term "open time" designates the length of a time period during which an adhesive applied to a surface of a substrate is still able to form an adhesive bond after being contacted with another substrate.

The "amount of at least one component X" in a composition, for example "the amount of the at least one polymer P" refers in the present document to the sum of the individual amounts of all polymers P contained in the composition. For example, in case the at least one polymer P is a poly-α-olefin and the composition comprises 20 wt.-% of at least one polymer P, the sum of the amounts of all poly-α-olefins contained in the composition equals 20 wt.-%.

According to the invention, the adhesive composition comprises a stabilizer component **S** comprising at least one first stabilizer **S1** and at least one second stabilizer **S2**.

The at least one first stabilizer **S1** is a non-sulfur containing compound having at least two phenolic groups.

The expression "non-sulfur containing" is understood to mean that the molecular structure of the first stabilizer **S1** does not contain any sulfur atoms. Furthermore, the term "phenolic group" refers a hydroxylated aromatic ring, whereby the hydroxy group is attached directly to the phenyl, substituted phenyl, or other aryl group.

In embodiments, the first stabilizer **S1** has a molecular weight determined by gel permeation chromatography (GPC) using polystyrene as standard of not more than 2500 g/mol, preferably not more than 2000 g/mol, particularly 150 - 2000 g/mol, especially 250 - 1500 g/mol.

The at least one second stabilizer **S2** is a sulfur containing compound, which is different from the at least one first stabilizer **S1.**

In embodiments, the second stabilizer **S2** has a molecular weight determined by gel permeation chromatography (GPC) using polystyrene as standard of not more than 2000 g/mol, preferably not more than 1500 g/mol, particularly 100 - 1500 g/mol, especially 200 - 1000 g/mol.

Particularly, at least one of the first **S1** and second stabilizer **S2** may be an ester type compound. The term "ester type compound" designates in the present disclosure compounds containing at least one ester linkage of formula -C(=O)-O-.

In preferred embodiments, the first stabilizer **S1** is a non-sulfur containing ester type compound having at least two phenolic groups and/or the second stabilizer **S2** is a sulfur containing ester type compound.

Such first and second stabilizers have been turned out to be especially suitable for improving the thermal stability of the adhesive composition. These types of compounds are commercially available, for example, from BASF under the trade name of Irganox^{®}.

In exemplary embodiments, the first stabilizer **S1** is ethylenebis(oxyethylene) bis[3-(5-tert-butyl-4-hydroxy-m-tolyl)propionate] or pentaerythritol tetrakis(3-(3,5-di-tert-butyl-4-hydroxyphenyl)propionate) and/or the second stabilizer **S2** is thiodiethylene bis[3-(3,5-di-tert.-butyl-4-hydroxy-phenyl)propionate] or a compound of formula (I) 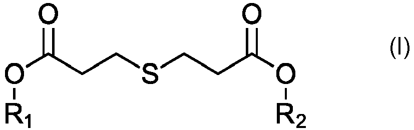 where R₁ and R₂ are independently of each other linear or branched C₁₀ to C₂₂ alkyl groups, preferably linear or branched C₁₂ to C₂₀ alkyl groups.

Particularly, the compound of formula (I) may be selected from dilauryl 3,3'-thiodipropionate, distearyl thiodipropionate, dimyristyl thiodipropionate, and ditridecyl thiodipropionate, especially dilauryl 3,3'-thiodipropionate.

In embodiments, the weight ratio of the at least one first stabilizers **S1,** the sum of weights of all first stabilizers **S1,** to the at least one second stabilizers **S2,** i.e. the sum of weights of all second stabilizer **S1,** in the adhesive composition is in the range of from 10:1 to 10:1, preferably from 5:1 to 1:5, more preferably from 3:1 to 1:3., still more preferably from 2:1 to 1:2.

In exemplary embodiments, the weight ratio of the at least one first stabilizers **S1** to the at least one second stabilizers **S2** is in the range of 1.5:1 to 1:1.5, preferably from 1.3:1 to 1:1.3, more preferably from 1.2:1 to 1:1.2.

Particularly, the sum of the weights of the at least one first stabilizer **S1** and the at least one second stabilizer **S2** makes up at least 0.1 wt.-%, preferably at least 0.15 wt.-% of the total weight of the adhesive composition.

In embodiments, the sum of weights of the at least one first stabilizer **S1** and the at least one second stabilizer **S2** makes up 0.05 - 2 wt.-%, preferably 0.1 - 1.5 wt.-%, more preferably 0.25 - 1.25 wt.-%, still more preferably 0.35 -1 of the total weight of the adhesive composition.

In preferred embodiments, the adhesive composition is a hot-melt adhesive. The term "hot-melt adhesive" refers to solvent free adhesives, which are solid at room temperature and which are applied to a substrate in form of a melt. In the present disclosure, the term "hot-melt adhesive" is considered to encompass also pressure sensitive hot-melt adhesives (HM-PSA).

In embodiments, the adhesive composition has a softening point determined by the Ring & Ball method as defined in ISO 4625-1:2020 standard of at or above 85 °C, preferably at or above 95 °C, more preferably at or above 105 °C.

Hot-melt adhesives can generally be provided as non-reactive or reactive compositions, particularly moisture curing compositions. Typically, moisture curing hot-melt adhesives contain one or more different types of polymers having functional groups, especially isocyanate and/or silane groups.

The term "silane group" refers to hydrolyzable groups bonded directly to a silicon atom via Si-O- bonds, particularly alkoxy groups or acyloxy groups, such as of formula (II) 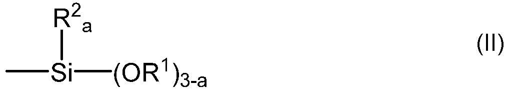
wherein R¹ represents an alkyl group with 1 to 8 carbon atoms, especially with 1 to 5 carbon atoms,
R² represents an alkyl group with 1 to 8 carbon atoms, especially between 1 to 5 carbon atoms, and
index a has a value of 0, 1 or 2, especially 0 or 1.

Silane groups have the property of undergoing hydrolysis on contact with moisture. In so doing, they form organosilanols, these being organosilicon compounds containing one or more silanol groups (Si-OH groups) and, by subsequent condensation reactions, organosiloxanes, these being organosilicon compounds containing one or more siloxane groups (Si-O-Si groups).

Particularly, the adhesive composition may be a non-reactive polyolefin-based hot-melt adhesive, a reactive polyolefin-based hot-melt adhesive, especially a moisture curing polyolefin-based hot-melt adhesive, a rubber-based hot-melt adhesive, or a reactive polyurethane-based hot-melt adhesive, especially a moisture curing polyurethane-based hot-melt adhesive.

In first exemplary embodiments, the adhesive composition is a polyolefin-based hot-melt adhesive, wherein the at least one polymer **P** is selected from at 25 °C solid non-functionalized and functionalized polyolefins, particularly from non-functionalized and silane-functionalized polyolefins, preferably form at 25 °C solid non-functionalized and functionalized poly-α-olefins, especially from non-functionalized and silane-functionalized poly-α-olefins, particularly from at 25 °C solid non-functionalized and silane-functionalized amorphous poly-α-olefin (APAO).

The term "functionalized polymer" designates in the present document polymers which are chemically modified so as to contain one or more functional groups. In contrast, the term "non-functionalized polymer" designates polymers which are not chemically modified so as to contain functional groups, for example, epoxy, silane, sulfonate, amine, amide, or anhydride groups. Furthermore, the terms "non-functionalized and "unmodified" can be used interchangeably.

Suitable at 25 °C solid non-functionalized or functionalized polyolefins, particularly poly-α-olefins, for use as the polymer **P** include, for example, homopolymers, copolymers, and terpolymers of monomers selected from ethylene, propylene, 1-butene and higher α-olefins. Especially suitable at 25 °C solid polyolefins, particularly poly-α-olefins, include homopolymers of propylene, copolymers of propylene and ethylene, copolymers of propylene and 1-butene or other higher α-olefins, homopolymers of ethylene, copolymers of ethylene and propylene, copolymers of ethylene and 1-butene or other higher α-olefins, and terpolymers of ethylene, propylene, and 1-butene.

In embodiments, the at least polymer **P** is selected from at 25 °C solid non-functionalized and functionalized amorphous poly-α-olefin (APAO), particularly from at 25 °C solid non-functionalized and silane-functionalized amorphous poly-α-olefin (APAO).

The term "amorphous poly-α-olefin" designates in the present disclosure poly-α-olefins having a low crystallinity degree, such as in the range of 0.001 - 10 wt.-%, particularly 0.001 - 5 wt.-%. A crystallinity degree of a polymer can be determined by using differential scanning calorimetry (DSC) measurement to determine the heat of fusion of the polymer, from which the degree of crystallinity is calculated. In particular, the term "amorphous poly-α-olefin" designates poly-α-olefins lacking a crystalline melting temperature (Tₘ) as determined by DSC or equivalent technique.

Suitable silane-functionalized poly-α-olefins can be obtained, for example, in a process comprising grafting an olefinically unsaturated alkoxysilanes to poly-α-olefins in the presence of a free-radical initiator, such as peroxide.

Suitable amorphous poly-α-olefins for use as the at least one polymer **P** include, for example, amorphous atactic polypropylene, amorphous propene rich propylene-α-olefin copolymers, and amorphous propene rich propylene-α-olefin terpolymers. Such amorphous poly-α-olefins are known to a person skilled in the art and they can be obtained, for example, by polymerization of α-olefins in the presence of a polymerization catalyst, such as a Ziegler-Natta catalyst or a metallocene catalyst or any other single-site catalyst.

Suitable non-functionalized or functionalized amorphous poly-α-olefins, particularly non-functionalized and silane-functionalized amorphous poly-α-olefins, are commercially available, for example, under the trade name of Vestoplast^{®} (from Evonik Industries), under the trade name of Eastoflex^{®} (from Eastman Corporation), and under the trade name of REXtac^{®} (from REXtac LLC).

Particularly suitable at 25 °C solid non-functionalized and functionalized amorphous poly-α-olefin (APAO) for use in the polyolefin-based hot-melt adhesive have:
- a softening point (Tₛ) determined by using the Ring and Ball method as defined in ISO 4625-1 :2020 standard of 60 - 200 °C, preferably 75 - 185 °C, more preferably 85 - 175 °C and/or
- an average molecular weight (Mₙ) in the range of 2500 - 35000 g/mol, preferably 3000 - 30000 g/mol, more preferably 5000 - 25000 g/mol and/or
- a melt viscosity at 190 °C determined according to DIN 53019 standard of not more than 150000 MPa s, preferably not more than 135000 MPa s, more preferably not more than 125000 MPa·s and/or
- xylene cold soluble content (XCS) determined at 25 °C according ISO 16152-2005 standard of at least 80 wt.-%, preferably at least 90 wt.-%, more preferably at least 95 wt.-% and/or
- a heat of fusion (Hf) as determined by DSC measurements of not more than 35 J/g, preferably not more than 30 J/g, more preferably not more than 25 J/g.

Particularly, the polyolefin-based hot-melt adhesive may comprise 5-85 wt.-%, preferably 15 - 75 wt.-%, more preferably 25 - 65 wt.-%, of the at least one polymer **P.**

In embodiments, the polyolefin-based hot-melt adhesive further comprises:
c) At least one tackifying resin **TR** and
d) Optionally at least one wax **W.**

The term "tackifying resin" designates in the present document resins that in general enhance the adhesion and/or tackiness of an adhesive composition. The term "tackiness" designates in the present document the property of a substance of being sticky or adhesive by simple contact. The tackiness can be measured, for example, as a loop tack. Preferred tackifying resins are tackifying at a temperature of 25°C

Examples of suitable tackifying resins include natural resins, synthetic resins and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" refers to compounds obtained from the controlled chemical reactions such as polyaddition or polycondensation between well-defined reactants that do not themselves have the characteristic of resins.

Monomers that may be polymerized to synthesize the synthetic resins may include aliphatic monomer, cycloaliphatic monomer, aromatic monomer, or mixtures thereof. Aliphatic monomers can include C₄, Cs, and C₆ paraffins, olefins, and conjugated diolefins. Examples of aliphatic monomer or cycloaliphatic monomer include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1- 3-hexadiene, 1-4-hexadiene, cyclopentadiene, dicyclopentadiene, and terpenes. Aromatic monomer can include C₈, C₉, and C₁₀ aromatic monomer. Examples of aromatic monomer include styrene, indene, derivatives of styrene, derivatives of indene, coumarone and combinations thereof.

Particularly suitable synthetic resins include synthetic resins made by polymerizing mixtures of unsaturated monomers that are obtained as by-products of cracking of natural gas liquids, gas oil, or petroleum naphthas. Such synthetic resins obtained from petroleum-based feedstocks are also characterized as "petroleum resins" or "hydrocarbon resins". These include also pure monomer aromatic resins, which are made by polymerizing aromatic monomer feedstocks that have been purified to eliminate color causing contaminants and to precisely control the composition of the product. Tackifying hydrocarbon resins typically have a relatively low average molecular weight (Mₙ), such in the range of 250 - 5000 g/mol and a glass transition temperature of above 0°C, preferably equal to or higher than 15°C, more preferably equal to or higher than 30°C.

Examples of suitable hydrocarbon resins for use as the tackifying resin **TR** include, for example, C5 aliphatic hydrocarbon resins, mixed C5/C9 aliphatic/aromatic hydrocarbon resins, aromatic modified C5 aliphatic hydrocarbon resins, cycloaliphatic hydrocarbon resins, mixed C5 aliphatic/cycloaliphatic hydrocarbon resins, mixed C9 aromatic/cycloaliphatic hydrocarbon resins, mixed C5 aliphatic/cycloaliphatic/C9 aromatic hydrocarbon resins, aromatic modified cycloaliphatic hydrocarbon resins, C9 aromatic hydrocarbon resins, polyterpene resins, and copolymers and terpolymers of natural terpenes as well hydrogenated versions of the aforementioned hydrocarbon resins. The notations "C5" and "C9" indicate that the monomers from which the resins are made are predominantly hydrocarbons having 4-6 and 8-10 carbon atoms, respectively. The term "hydrogenated" includes fully, substantially, and at least partially hydrogenated resins. Partially hydrogenated resins may have a hydrogenation level, for example, of 50%, 70%, or 90%.

Preferably, the at least one tackifying resin **TR** is a non-functionalized tackifying resin. The term "non-functionalized tackifying resin" designates tackifying resins which are not chemically modified so as to contain functional groups such as epoxy, silane, sulfonate, amide, or anhydride groups.

In embodiments, the at least one tackifying resin **TR** has:
- a softening point measured by a Ring and Ball method according to ISO 4625-1:2020 standard in the range of 65 - 175 °C, preferably 70 - 165 °C, more preferably 80 - 155 °C, and/or
- a number average molecular weight (Mₙ) in the range of 150 - 5000 g/mol, preferably 250 - 3500 g/mol, more preferably 250 - 3000 g/mol, and/or
- a glass transition temperature (T_{g}) determined by dynamical mechanical analysis (DMA) as the peak of the measured loss modulus (G") curve using an applied frequency of 1 Hz and a strain level of 0.1% of at or above 0 °C, preferably at or above 10 °C, more preferably at or above 15 °C.

Suitable hydrocarbon resins are commercially available, for example, under the trade name of Wingtack^{®} series, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from Exxon Mobile Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from RÜTGERS Novares GmbH); and under the trade name of Kristalex^{®}, Plastolyn^{®}, Piccotex^{®}, Piccolastic^{®} and Endex^{®} (all from Eastman Chemicals).

In exemplary embodiments, the polyolefin-based hot melt adhesive contains 5-75 wt.-%, preferably 15 - 65 wt.-%, more preferably 25 - 55 wt.-% of the at least one tackifying resin **TR.**

The term "wax" designates in the present disclosure substances that have a waxy consistency and have a melting temperature or melting temperature range of above normal room temperature, particularly above 25 °C.

Suitable waxes to be used in the acoustic damping material include in particular synthetic waxes, for example, petroleum waxes, such as paraffin wax, petrolatum, and microcrystalline waxes, polyolefin waxes, polyethylene glycol waxes (Carbowax), amide waxes, and chemically modified waxes, such as hardened or hydrogenated waxes, for example, Montan ester waxes.

Particularly, the at least one wax **W** may be selected from the group consisting of paraffin waxes, polyolefin waxes, microcrystalline waxes, and amide waxes, especially from paraffin waxes and polyolefin waxes.

The term "paraffin wax" refers in the present document to hard, crystalline wax composed mainly of saturated paraffin hydrocarbons. The paraffin waxes are typically obtained from petroleum distillates or derived from mineral oils of the mixed-base or paraffin-base type.

Especially suitable paraffin waxes include Fischer-Tropsch waxes, particularly having a softening point determined by using the Ring and Ball method according to ISO 4625-1:2020 standard of 75 - 150 °C, particularly 80- 140 °C, such as 85 - 130 °C.

The term "polyolefin wax" refers in the present document low molecular weight polymers of linear or branched α-olefins having from 2 to 30 carbon atoms and an average molecular weight (Mₙ) in the range of 5000 - 25000 g/mol. They include both homopolymers and copolymers of the above mentioned linear or branched α-olefins. Polyolefin waxes can be obtained by thermal decomposition of polyolefin plastics, particularly polyethylene plastic, or by direct polymerization of olefins.

Suitable polymerization processes to obtain polyolefin waxes include, for example, free-radical processes, where the olefins, for example, ethylene, are reacted at high pressures and temperatures to give more or less branched waxes and processes, where ethylene and/or higher α-olefins, particularly propylene, are polymerized using metalorganic catalysts, for example Ziegler-Natta or metallocene catalysts, to give unbranched or branched waxes. The polyolefin waxes have generally at least partially crystalline structure.

Especially suitable polyolefin waxes include polar-modified polyolefin waxes. These types of waxes may be used in the polyolefin-based hot-melt adhesive, for example, to improve the adhesion to polar substrates. Suitable polar-modified polyolefin waxes include waxes that are obtained by grafting polar olefin monomers, for example, α-β-unsaturated carboxylic acids and/or derivatives thereof, for example (meth)acrylic acid or maleic acid anhydride and/or substituted and/or unsubstituted styrene, to polyolefin waxes.

Especially suitable polar-modified polyolefin waxes include maleic acid anhydride-functionalized polyolefin waxes, particularly selected from ethylene and propylene homo and copolymer waxes grafted with maleic acid anhydride, for example polypropylene and polyethylene waxes grafted with maleic acid anhydride.

Suitable maleic acid anhydride-functionalized polyolefin waxes may have a maleic anhydride grafting degree of at least 1 wt.-%, for example at least 3 wt.-%, particularly 2-15 wt.-%, preferably 4 - 15 % wt.-% and/or a melt viscosity at a temperature of 170 °C determined according to DIN 53019 standard in the range of 10 - 10000 mPa s, for example 100 to 5000 mPa·s, particularly 500 - 3500 mPa·s.

In exemplary embodiments, the polyolefin-based hot-melt adhesive contains 0.5 - 20 wt.-%, preferably 1 - 15 wt.-%, more preferably 1.5 - 10 wt.-% of the at least one wax **W.**

In second exemplary embodiments, the adhesive composition is rubber-based hot-melt adhesive, particularly a rubber-based pressure sensitive hot-melt adhesive, wherein the at least one polymer **P** is selected from rubbers and thermoplastic elastomers, preferably from butyl rubber, rubber like ethylene vinyl acetate copolymer, natural rubber, nitrile rubber, silicone rubber, ethylene-propylene-diene rubber, and styrene block copolymer.

In embodiments, the adhesive composition is rubber-based hot-melt adhesive, particularly a rubber-based pressure sensitive hot-melt adhesive, wherein the at least one polymer **P** is a styrene block copolymer.

The expression "the at least one polymer **P** is a styrene block copolymer" is understood to mean that the at least one polymer **P** is selected from a group consisting of styrene block copolymers.

Suitable styrene block copolymers for use as the at least one polymer **P** in the rubber-based hot-melt adhesive, particularly the rubber-based pressure sensitive hot-melt adhesive, include block copolymers of the SX and SXS type, in each of which S denotes a non-elastomer styrene (or polystyrene) block and X denotes an elastomeric α-olefin block, which may be polybutadiene, polyisoprene, polyisoprene-polybutadiene, completely or partially hydrogenated polyisoprene (poly ethylene-propylene), completely or partially hydrogenated polybutadiene (poly ethylene-butylene). The elastomeric α-olefin block may also be a chemically modified α-olefin block. Particularly suitable chemically modified α-olefin blocks include, for example, maleic acid-grafted α-olefin blocks and particularly maleic acid-grafted ethylene-butylene blocks.

In embodiments, the at least one polymer **P** is selected from styrene-isoprene diblock (SI) copolymers, styrene-isoprene-styrene triblock (SIS) copolymers, styrene-butadiene diblock (SB) copolymers, styrene-butadiene-styrene triblock (SBS) copolymers, styrene-isoprene-butadiene-styrene block copolymers (SIBS), styrene-ethylene-butadiene-styrene (SEBS) block copolymers, styrene-ethylene-propylene-styrene block (SEPS) copolymers, and styrene-ethylene-ethylene-butylene-styrene copolymers (SEEPS).

Particularly suitable styrene block copolymers for use as the at least one polymer P in the rubber-based hot-melt adhesive, particularly the rubber-based pressure sensitive hot-melt adhesive, include, for example, block copolymers containing polystyrene and polybutadiene blocks and/or polyisoprene blocks. These materials are generally available as pure triblock copolymers, also known as SIS and SBS block copolymers, and as diblock copolymers (SI and SB block copolymers). Furthermore, styrene block copolymers are also commercially available as mixtures of diblock and triblock copolymers. Suitable styrene block copolymers can have a linear, radial, or star structure, the linear structure being especially preferred.

In embodiments, the at least one polymer **P** is selected from styrene-isoprene diblock (SI) copolymers, styrene-isoprene-styrene triblock (SIS) copolymers, styrene-butadiene diblock (SB) copolymers, and styrene-butadiene-styrene triblock (SBS) copolymers.

Suitable SI, SIS, SB, and SBS block copolymers are commercially available, for example from TSRC/Dexco under the trade name of Vector^{®}, such as Vector^{®} 4000-series, and from Kraton Polymers under the trade name of Kraton^{®} D-series.

Particularly, the rubber-based hot-melt adhesive may comprise 5 - 55 wt.-%, preferably 10 - 50 wt.-%, more preferably 15 - 45 wt.-%, of the at least one polymer **P.**

In embodiments, the rubber-based hot-melt adhesive further comprises:
c) The at least one tackifying resin **TR** as discussed above and
d) Optionally at least one plasticizer **PL.**

Preferably, the rubber-based hot-melt adhesive comprises at least 5 wt.-%, particularly at least 10 wt.-% of the at least one tackifying resin **TR.**

In embodiments, the rubber-based hot-melt adhesive contains 10 - 60 wt.-%, preferably 15 - 55 wt.-%, more preferably 20 - 50 wt.-% of the at least one tackifying resin **TR.**

Particularly, the at least one plasticizer **PL** may be selected from process oils and liquid polyolefin resins.

Especially suitable process oils for use as the at least one plasticizer **PL** include mineral oils, synthetic oils, and vegetable oils.

The term "mineral oil" refers in the present disclosure hydrocarbon liquids of lubricating viscosity (i.e., a kinematic viscosity at 100 °C of 1 cSt or more) derived from petroleum crude oil and subjected to one or more refining and/or hydroprocessing steps, such as fractionation, hydrocracking, dewaxing, isomerization, and hydrofinishing, to purify and chemically modify the components to achieve a final set of properties. In other words, the term "mineral" refers in the present disclosure to refined mineral oils, which can be also characterized as Group I-III base oils according to the classification of the American Petroleum Institute (API).

Suitable mineral oils to be used as the at least one plasticizer **PL** include paraffinic, naphthenic, and aromatic mineral oils. Particularly suitable mineral oils include paraffinic and naphtenic oils containing relatively low amounts of aromatic moieties, such as not more than 25 wt.-%, preferably not more than 15 wt.-%, based on the total weight of the mineral oil.

The term "synthetic oil" refers in the present disclosure to full synthetic (polyalphaolefin) oils, which are also known as Group IV base oils according to the classification of the American Petroleum Institute (API). Suitable synthetic oils are produced from liquid polyalphaolefins (PAOs) obtained by polymerizing α-olefins in the presence of a polymerization catalyst, such as a Friedel-Crafts catalyst. In general, liquid PAOs are high purity hydrocarbons with a paraffinic structure and high degree of side-chain branching. Particularly suitable synthetic oils include those obtained from so-called Gas-To-Liquids processes.

The term "liquid polyolefin resin" refers in the present disclosure to a polyolefin resin that flows at normal room temperature, i.e., has a pour point of less than 20 °C.

Suitable liquid polyolefin resins to be used as the at least one plasticizer **PL** include, for example, liquid polybutene and liquid polyisobutylene (PIB). The term "liquid polybutene" refers in the present disclosure to low molecular weight olefin oligomers comprising isobutylene and/or 1-butene and/or 2-butene. The ratio of the C4-olefin isomers can vary by manufacturer and by grade. When the C4-olefin is exclusively 1-butene, the material is referred to as "poly-n-butene" or "PNB". The term "liquid polyisobutylene" refers in the present document to low molecular weight olefin oligomers of isobutylene, preferably containing at least 75 wt.-%, more preferably at least 85 wt.-% of repeat units derived from isobutylene. Suitable liquid polybutenes and polyisobutylenes have a number average molecular weight (Mₙ) of less than 5000 g/mol, preferably less than 3500 g/mol, more preferably less than 3000 g/mol, even more preferably less than 2500 g/mol.

Suitable liquid polybutenes and polyisobutylenes are commercially available, for example, under the trade name of Indopol^{®}, such as Indopol^{®} H-300 and Indopol^{®} H-1200 (from Ineos); under the trade name of Glissopal^{®} , such as Glissopal^{®} V230, Glissopal^{®} V500, and Glissopal^{®} V700 (from BASF); under the trade name of Dynapak^{®}, such as Dynapak^{®} poly 230 (from Univar GmbH, Germany); and under the trade name of Daelim^{®} , such as Daelim^{®} PB 950 (from Daelim Industrial).

Especially suitable liquid polybutenes and liquid polyisobutylenes for use as the at least one plasticizer **PL** have:
- an average molecular weight (Mₙ) of 150 - 3500 g/mol, preferably 250 - 3000 g/mol and/or
- a pour point determined according to ISO 3016 in the range of -10 to +15 °C, preferably from -10 to +10 °C and/or
- a polydispersity index (M_{w}/Mₙ), determined by GPC, of not more than 5, preferably in the range of 0.5 - 5.0, more preferably 1.0 - 4.5.

The at least one plasticizer **PL**, if used, preferably makes up 0.5 - 15 wt.-%, more preferably 1.5 - 12.5 wt.-%, even more preferably 2.5 - 10 wt.-% of the total weight of the rubber-based hot-melt adhesive.

In third exemplary embodiments, the adhesive composition is a polyurethane-based hot-melt adhesive, particularly a moisture curing polyurethane-based hot-melt adhesive, wherein the at least one polymer **P** is a polyurethane polymer, particularly a functionalized polyurethane polymer, especially an isocyanate and/or silane-functionalized polyurethane polymer.

In this document, the term "polyurethane polymer" refers to polymers prepared by the so called diisocyanate polyaddition process. These also include those polymers which are virtually or entirely free from urethane groups. Examples of polyurethane polymers are polyether-polyurethanes, polyester-polyurethanes, polyether-polyureas, polyureas, polyester-polyureas, polyisocyanurates and polycarbodiimides.

Furthermore, the term "isocyanate-functional polyurethane polymer" designates polyurethane polymers comprising unreacted isocyanate groups. Such polyurethane polymers can be obtained by reacting excess of polyisocyanates, particularly diisocyanates, with polyols. Particularly, the term "isocyanate-functional polyurethane polymer" encompasses isocyanate-terminated polyurethane polymers, i.e., those comprising unreacted isocyanate groups at the chain ends. The terms "isocyanate-functional polyurethane polymer", "polyurethane prepolymer", and "isocyanate-functionalized polyurethane polymer" can be used interchangeably.

In analogy, the term "silane-functional polyurethane polymer" or "silane-functionalized polyurethane polymer designates polyurethane polymers comprising silane groups. Furthermore, the at least one polyurethane polymer may be both isocyanate- and silane-functionalized, i.e., comprising both of these functional group.

In embodiments, the adhesive composition is a polyurethane-based hot-melt adhesive, wherein the at least one polymer **P** is an isocyanate-functional polyurethane polymer.

Suitable isocyanate-functional polyurethane polymers for use as the at least one polymer **P** are obtained by reacting at least one polyol **PO** with at least one diisocyanate **I** at a molar ratio of isocyanate groups to hydroxyl groups of at least 3 preferably at least 3.5 and optionally subjecting the thus obtained reaction mixture to a treatment to reduce the amount of residual monomeric diisocyanates, preferably by distillation.

The reaction between polyol **PO** and diisocyanate I may, for example, be carried out at temperatures in the range of 60 - 160 °C, preferably 80 - 140 °C, optionally in the presence of a catalyst. The reaction time, as will be appreciated, depends on the temperature employed, but may, for example, be in the range of from 30 minutes to 6 hours, preferably from 30 minutes to 3 hours, more preferably from 30 minutes to 1.5 hours. Suitable catalysts include, for example, metal catalysts, such as Coscat^{®}83 (from Vertellus Performance Materials Inc.), and tin catalysts.

In embodiments, the at least one polymer **P** is an isocyanate-functional polymer having an average isocyanate- functionality determined according to ISO 14896-2009 standard method A in the range of 1.2 - 3.0, preferably 1.5 - 2.5 and/or an isocyanate content determined by using the method as defined in ISO 11909:2007 standard in the range of 0.5 - 25 wt.-%, preferably 1.0 - 20 wt.-%.

Especially suitable diisocyanates **I** include monomeric aliphatic, cyclo-aliphatic, and aromatic diisocyanates.

The term "monomeric diisocyanate" refers in the present document to an organic compound with two isocyanate groups that are separated by a divalent hydrocarbon radical, preferably having an average molecular weight of not more than 1000 g/mol. Particularly, a monomeric diisocyanate contains no urethane groups and oligomers or polymer products of diisocyanate monomers, such as adducts of monomeric diisocyanates, are not considered to be "monomeric diisocyanates" in the context of the present invention.

Preferably, the diisocyanate **I** is a monomeric diisocyanate, more preferably a monomeric diisocyanate having a number average molecular weight (Mₙ) of not more than 750 g/mol, preferably not more than 500 g/mol, more preferably not more than 350 g/mol.

Examples of suitable monomeric diisocyanates include aliphatic and aromatic monomeric diisocyanates, for example, 1,6-hexamethylene diisocyanate (HDI), 2-methylpentamethylene 1,5-diisocyanate, 2,2,4- and 2,4,4-trimethyl-1,6-hexamethylene diisocyanate (TMDI) and mixtures of these isomers, 1,10 decamethylene diisocyanate, 1,12-dodecamethylene diisocyanate, lysine diisocyanate, lysine ester diisocyanate, cyclohexane 1,3-diisocyanate and cyclohexane 1,4-diisocyanate and mixtures of these isomers, 1-methyl-2,4- and -2,6-diisocyanatocyclohexane and mixtures of these isomers (HTDI or H6TDI), 1-isocyanato-3,3,5-trimethyl-5-isocyanatomethylcyclohexane (= isophoronediisocyanate or IPDI), perhydro-2,4'- and -4,4'-diphenylmethane diisocyanate (HMDI or H12MDI) and mixtures of these isomers, 1,4- diisocyanato-2,2,6-trimethylcyclohexane (TMCDI), 1,3- and 1,4-bis(isocyanato-methyl)cyclohexane, m- and p-xylylene diisocyanate (m- and p-XDI) and mixtures of these isomers, m- and p-tetramethyl-1,3- and 1,4-xylylene diisocyanate (m- and p-TMXDI) and mixtures of these isomers, bis(1-isocyanato-1-methylethyl)naphthalene, 2,4- and 2,6-tolylene diisocyanate and mixtures of these isomers (TDI), 4,4'-diphenylmethane diisocyanate, optionally with proportions of 2,4'- and/or 2,2'-diphenylmethane diisocyanate (MDI), 1,3- and 1,4-phenylene diisocyanate (PDI) and mixtures of these isomers, naphthalene 1,5-diisocyanate (NDI), 3,3'-dimethyl-4,4'-diisocyanatobiphenyl (TODI), and dianisidine diisocyanate (DADI).

Suitable aliphatic and aromatic monomeric diisocyanates are commercially available, for example, under the trade names of Lupranat^{®} (from BASF), Desmodur^{®} (from Covestro), and Duranate^{®} (from Asahi Kasei).

In one or more embodiments, the at least one diisocyanate I is selected from 4,4'-diphenylmethane diisocyanate (4,4'-MDI), 2,4'-diphenylmethane diisocyanate (2,4'-MDI), 2,2'-diphenylmethane diisocyanate (2,2' MDI), or mixtures of these isomers, tolylene diisocyanate (TDI), particularly 2,4-tolylene diisocyanate (2,4 TDI), 2,6-tolylene diisocyanate (2,6 TDI), or mixtures of these isomers, 1,6-hexamethylene diisocyanate (HDI), and 1-isocyanato-3,3,5-trimethyl-5-isocyanatomethylcyclohexane (IPDI). Furthermore, a person skilled in the art knows that the technical grade monomeric diisocyanates may come in the form of isomer mixtures and may contain oligomers as impurities.

Suitable polyols **PO** include, particularly, polyester polyols, polyether polyols, polycarbonate polyols, and poly(tetramethylene ether)glycol.

Preferred polyester polyols include liquid, amorphous, partially crystalline, and crystalline polyester polyols. These can be obtained from by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids, and also polyester polyols made from lactones such as from ε-caprolactone, for example, also known as polycaprolactones.

Preferred polyester polyols include those obtained by reacting adipic acid, sebacic acid or dodecanedicarboxylic acid as dicarboxylic acid and hexanediol or neopentyl glycol as dihydric alcohol. Further examples of suitable polyester polyols include polyester polyols of oleochemical origin. Polyester polyols of this type may be prepared, for example, by complete ring opening of epoxidized triglycerides of a fat mixture comprising at least partially olefinically unsaturated fatty acids, with one or more alcohols having 1-12 carbon atoms, and by subsequent partial transesterification of the triglyceride derivatives to give alkyl ester polyols having 1-12 carbon atoms in the alkyl radical. Particularly suitable crystalline or semicrystalline polyester polyols include adipic acid/hexanediol polyester and dodecanedicarboxylic acid/hexanediol polyesters.

Particularly suitable polyether polyols include polyoxyalkylenepolyols.

These are products of the polymerization of ethylene oxide, 1,2-propylene oxide, 1,2- or 2,3-butylene oxide, oxetane, tetrahydrofuran or mixtures thereof, optionally polymerized using a starter molecule with two or more active hydrogen atoms, such as water, ammonia or compounds with several OH- or NH-groups, such as 1,2-ethanediol, 1,2- and 1,3-propanediol, neopentylglycol, diethyleneglycol, triethyleneglycol, the isomeric dipropylene-glycols and tripropyleneglycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, as well as mixtures of the above-mentioned compounds.

Preferred are both polyoxyalkylenepolyols with a low degree of unsaturation (measured according to ASTM D-2849-69 and indicated in milliequivalents of unsaturation per gram of polyol (meq/g)), obtainable, for example, by using so-called double metal cyanide complex catalysts (DMC catalysts), and polyoxyalkylenepolyols with a higher degree of unsaturation, obtainable, for example, by using anionic catalysts such as NaOH, KOH, CsOH or alkali alcoholates. Particularly preferred polyoxyalkylenepolyols are polymerization products of ethylene oxide and/or propylene oxide.

Particularly suitable polyether polyols include polyoxyalkylene diols and poly-oxyalkylene triols, especially polyoxyethylene diols and triols and polyoxypropylene diols and triols, preferably having a number average molecular weight (Mₙ) in the range of 400 - 15000 g/mol, especially 500 - 10000 g/mol.

Likewise particularly suitable polyether polyols are what are known as ethylene oxide-terminated ("EO-endcapped", ethylene oxide-endcapped) polyoxypropylene polyols. The latter are special polyoxypropylene polyoxyethylene polyols that are obtained for example when pure polyoxypropylene polyols, especially polyoxypropylene diols and triols, are at the end of the polypropoxylation reaction further alkoxylated with ethylene oxide and thus have primary hydroxyl groups. Preference in this case is given to polyoxypropylene polyoxyethylene diols and polyoxypropylene polyoxyethylene triols.

Suitable polyether polyols are commercially available, for example, under the trade name of Acclaim^{®}, Desmophen^{®}, and Arcol^{®} (all from Covestro); under the trade name of Voranol^{®} (from Dow); and under the trade name of Dianol^{®} (from Arkema).

Further particularly preferred polyols are polycarbonate polyols, particularly products of the polycondensation of dialkyl carbonates, diaryl carbonates or phosgene with diols or triols such as ethylene glycol, diethylene glycol, propylene glycol, dipropylene glycol, neopentyl glycol, 1,4-butanediol, 1,5-pentanediol, 3-methyl-1,5-hexanediol, 1,6-hexanediol, 1,8-octanediol, 1,10-decanediol, 1,12-dodecanediol, 1,12-octadecanediol, 1,4-cyclohexane dimethanol, dimeric fatty acid diol (dimeryl diol), hydroxypivalic neopentylglycol ester, glycerol and 1,1,1-trimethylolpropane.

Along with the above-mentioned polyols, small amounts of low molecular weight divalent or multivalent alcohols can be used, such as 1,2-ethanediol, 1,2-propanediol, neopentyl glycol, diethylene glycol, triethylene glycol, the isomeric dipropylene glycols and tripropylene glycols, the isomeric butanediols, pentanediols, hexanediols, heptanediols, octanediols, no-nanediols, decanediols, undecanediols, 1,3- and 1,4-cyclohexanedimethanol, hydrogenated bisphenol A, dimer fatty alcohols, 1,1,1-trimethylolethane, 1,1,1-trimethylolpropane, glycerol, pentaerythritol, sugar alcohols, such as xylitol, sorbitol or mannitol, sugars, such as saccharose, other polyhydric alcohols, low molecular weight alkoxylation products of the above-mentioned divalent or multivalent alcohols, as well as mixtures of the above-mentioned alcohols.

In embodiments, the at least one isocyanate-functional polyurethane polymer has a content of monomeric diisocyanates of not more than 1.0 wt.-%, preferably not more than 0.5 wt.-%, more preferably not more than 0.25 wt.-%, based on the total weight of the at least one isocyanate-functional polyurethane polymer.

Such isocyanate-functional polyurethane polymers can be obtained, for example, by subjecting the reaction product of the least one polyol **PO** and the at least one diisocyanate I to a treatment to reduce the amount of residual monomeric diisocyanates, particularly by distillation. Suitable distillation processes include, for example, thin film distillation and molecular distillation.

Particularly, the polyurethane-based hot-melt adhesive may comprise 15 -75 wt.-%, preferably 25 - 70 wt.-%, more preferably 35 - 65 wt.-% of the at least one polymer **P.**

In embodiments, the polyurethane-based hot-melt adhesive further comprises:
c) The at least one tackifying resin **TR** as discussed above and
d) Optionally at least one poly(meth)acrylate **AC.**

The term "(meth)acrylate" designates in the present disclosure methacrylate or acrylate.

The term "poly(meth)acrylate" refers to homopolymers, copolymers, and higher interpolymers of an (meth)acrylate monomer with one or more further (meth)acrylate monomers and/or with one or more further monomers.

Suitable (meth)acrylate monomers include, for example, alkyl(meth)acrylates, such as methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and their branched isomers, as for example isobutyl acrylate, 2-ethylhexyl acrylate, 2-ethylhexyl methacrylate, isooctyl acrylate, isooctyl methacrylate, and also cyclohexyl methacrylate, isobornyl acrylate, isobornyl methacrylate or 3,5-dimethyladamantyl acrylate.

Further suitable comonomers for the synthesis of the poly(meth)acrylate **AC** include vinyl compounds, such as ethylenically unsaturated hydrocarbons with functional groups, vinyl esters, vinyl halides, vinylidene halides, nitriles of ethylenically unsaturated hydrocarbons, phosphoric acid esters, and zinc salts of (meth)acrylic acid. Examples of further suitable comonomers include, for example, maleic anhydride, styrene, styrenic compounds, acrylonitriles, vinyl acetate, vinyl propionate, vinyl chloride, (meth)acrylic acid, beta-acryloyloxypropionic acid, vinylacetic acid, fumaric acid, crotonic acid, aconitic acid, trichloroacrylic acid, itaconic acid, and maleic acid, and amides thereof.

Especially suitable poly(meth)acrylates include, for example, homopolymers and copolymers obtained by free radical polymerization of one or more (meth)acrylate monomers optionally in combination with at least one further comonomer.

In embodiments, the at least one poly(meth)acrylate **AC** has:
- an acid number determined according to EN ISO 2114:2002-06 standard of not more than 15 mg KOH/g, preferably not more than 10 mg KOH/g and/or
- a glass transition temperature determined according to ISO 11357-1 standard of at or above 25 °C, preferably at or above 50 °C and/or
- a weight average molecular weight (M_{w}) determined by gel permeation chromatography (GPC) using polystyrene as standard of 15000 - 100000 g/mol, preferably 25000 - 65000 g/mol.

In embodiments, the polyurethane-based hot-melt adhesive comprises 15 - 65 wt.-%, preferably 35 - 55 wt.-% of the poly(meth)acrylate **AC.**

In further embodiments, the polyurethane-based hot-melt adhesive further comprises:
e) at least one aliphatic polyisocyanate oligomer **APO.**

It has surprisingly been found out that polyurethane-based hot-melt adhesives comprising the aliphatic polyisocyanate oligomer **APO** exhibit improved thermal stability.

The term "oligomer" designates in the present disclosure a compound built up through the linkage of a few monomers, for example dimers, trimers, tetramers and other polymeric materials. Term "polyisocyanate oligomer" can designate an individual oligomer or a mixture of oligomers of diisocyanates, wherein these oligomers can be built up of like or different diisocyanates.

In preferred embodiments, the aliphatic polyisocyanate oligomer **APO** has an average isocyanate functionality of at least 2, preferably at least 2.5.

In exemplary embodiments, the aliphatic polyisocyanate oligomer **APO** is a oligomer of an aliphatic diisocyanate, preferably selected from hexamethylene 1,6-diisocyanate (HDI), 2-methylpentamethylene 1,5-diisocyanate, 2,2,4- and 2,4,4-trimethylhexamethylene 1,6-diisocyanate (TMDI), dodecamethylene 1,12-diisocyanate, cyclohexane 1,3- and 1,4-diisocyanate and any desired mixtures of these isomers, 1-isocyanato-3,3,5-trimethyl-5-isocyanatomethylcyclohexane (IPDI), perhydrodiphenylmethane 2,4'- and 4,4'-diisocyanate (HMDI), 1,4-diisocyanato-2,2,6-trimethylcyclohexane (TMCDI), and 1,3 and 1,4-bis(isocyanatomethyl)cyclohexane.

Technical forms of trimers of an aliphatic diiosocyanates are typically mixtures of substances having different degrees of polymerization and chemical structures. Suitable commercially available trimers of aliphatic diisocyanates include technical oligomer mixtures having an average isocyanate-functionality of from 2.4 to 4.0 and containing, in particular, isocyanurate, iminooxadiazinedione or biuret groups. In addition, there may also be allophanate, carbodiimide, uretonimine or oxadiazinetrione groups present. Preferred technical form of trimers of aliphatic diisocyanates are oligomer mixtures comprising a major portion of trimers of aliphatic diisocyanates in a mixture with dimers and higher oligomers. Especially preferred are oligomer mixtures comprising low amount of monomeric diisocyanates, particularly having a content of monomeric diisocyanates of not more than 1.0 wt.-%, preferably not more than 0.5 wt.-%, even more preferably not more than 0.25 wt.-%, still more preferably not more than 0.15 wt.-%.

Suitable commercially available technical oligomer mixtures of aliphatic diisocyanates include HDI biurets, for example Desmodur^{®} N 100 and N 3200 (from Coverstro), Tolonate^{®} HDB and HDB-LV (from Vencorex) and Duranate^{®} 24A-100 (from Asahi Kasei); HDI isocyanurates, for example Desmodur^{®} N 3300, N 3600 and N 3790 BA (all from Coverstro), Tolonate^{®} HDT, HDT-LV and HDT-LV2 (all from Vencorex), Duranate^{®} TPA-100 and THA-100 (from Asahi Kasei) and Coronate^{®} HX (from Nippon Polyurethanes); HDI iminooxadiazinediones, for example as Desmodur^{®} XP 2410 (from Coverstro); HDI allophanates, for example as Desmodur^{®} VP LS 2102 (form Covestro); and IPDI isocyanurates, for example in solution such as Desmodur^{®} Z 4470 (from Covestro) or in solid form as Vestanat^{®} T1890/100 (from Evonik Degussa).

In embodiments, the aliphatic polyisocyanate oligomer **APO** is selected from hexamethylene diisocyanate (isocyanurate) trimer, hexamethylene diisocyanate biuret trimer, and isophorone diisocyanate (isocyanurate) trimer, preferably from hexamethylene diisocyanate (isocyanurate) trimer and hexamethylene diisocyanate biuret trimer.

In embodiments, the polyurethane-based hot-melt adhesive comprises 0.1 - 15 wt.-%, preferably 1-10 wt.-% of the aliphatic polyisocyanate oligomer **APO.**

In embodiment, the polyurethane-based hot-melt adhesive further comprises at least one catalyst **CAT** that catalyzes the reactions of isocyanate groups with water.

Examples of suitable catalysts include metal-based catalysts such as dialkyltin complexes, particularly dibutyltin(IV) or dioctyltin(IV) carboxylates or acetoacetonates, such as dibutyltindilaurate (DBTDL), dibutyltindiacetylacetonate, dioctyltindilaurate (DOTDL), further bismuth(lll) complexes such as bismuthoctoate or bismuthneodecanoate, zinc(ll) complexes, such as zincoctoate or zincneodecanoate, and zirconium(IV) com-plexes, such as zirconiumoctoate or zirconiumneodecanoate.

Further examples of suitable catalysts include compounds containing amine groups such as, dimorpholinodialkylethers and/or dimorpholino substituted polyalkylene glycols, for example 2,2'-dimorpholinodiethyl ether and 1,4-diazabicyclo[2.2.2]-octane. Combinations of two or more catalysts may also be used, preferred combinations including of one or more metal-catalysts with one or more morpholine amine compounds.

Generally, the adhesive composition of the present invention can further comprise auxiliary substances and additives, for example, those selected from the group consisting of plasticizers, adhesion promoters, UV absorption agents, UV and heat stabilizers, optical brighteners, pigments, dyes, and desiccants.

Examples of suitable UV stabilizers that can be added to the adhesive composition include, for example, sterically hindered phenols, and suitable UV-absorbers include, for example, hydroxybenzophenones, hydroxybenzotriazoles, triazines, anilides, benzoates, cyanoacrylates, phenylformamidines, and mixtures thereof.

The total amount of such auxiliary substances and additives is preferably not more than 10 wt.-%, more preferably not more than 5 wt.-%, based on the total weight of the adhesive composition.

The adhesive composition of the present invention has good workability under typical application conditions of hot-melt adhesives, particularly at temperatures in the range of 85 - 200 °C, meaning that at the application temperature the adhesive has sufficiently low viscosity to enable application to a substrate in a molten state. The adhesive composition also develops a high initial strength immediately after the application to a substrate upon cooling even before the initiation of the crosslinking reaction with water, particularly with atmospheric moisture.

A further aspect of the present invention is use of the adhesive composition of the present invention as an automotive assembly adhesive, laminating adhesive, or as an adhesive for the building of sandwich elements.

A still further aspect of the present invention is a method for adhesively bonding a first substrate to a second substrate, the method comprising steps of:
I) Heating an adhesive composition according to present invention to provide a melted adhesive composition,
II) Applying the melted adhesive composition to a surface of the first substrate,
III) Contacting the applied adhesive with a surface of the second substrate, and
IV) IV) Physically curing the applied adhesive by cooling and/or chemically curing the applied adhesive with water, preferably with atmospheric moisture.

The first and second substrates can be sheet-like articles having first and second major surfaces defined by peripheral edges and defining a thickness there between or three-dimensional shaped articles.

In the method for adhesively bonding a first substrate to a second substrate, the adhesive composition is heated to a temperature above the softening point of the adhesive composition and applied to the surface of the first substrate in molten state using any conventional technique, for example, by means of a roller, brush, or by pouring out and further distributed by means, for example, of a roller, a scraper, or a notched trowel.

After the applied adhesive has been contacted with the surface of the second substrate, the adhesive composition develops a certain initial adhesive strength by physical curing, i.e., upon cooling. Depending on the application temperature and on the embodiment of the adhesive composition, particularly on the reactivity of the adhesive, the chemical curing reactions may begin already during the application of the adhesive composition on the surface of the first substrate. Typically, however, majority of the chemical curing occurs after the application of adhesive, particularly, after the applied adhesive has been contacted with the surface of the second substrate.

The first and second substrates can be composed of any conventional material including polymeric material, metal, painted metal, glass, wood, wood derived materials such as natural fiber polypropylene (NFPP), and fiber materials. Suitable polymeric materials include, for example, polyethylene (PE), in particular high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof. The first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

Another aspect of the present invention is use of a stabilizer **SB** for improving the heat stability of an adhesive composition, preferably a hot-melt adhesive composition, wherein the stabilizer **SB** comprises:
b1) At least one first stabilizer **SB1** and
b2) At least one second stabilizer **SB2,**
wherein the first stabilizer **SB1** is a non-sulfur containing compound having at least two phenolic groups and the second stabilizer **SB2** is a sulfur containing compound.

In embodiments, the first stabilizer **SB1** is the first stabilizer **S1** and/or the second stabilizer **SB2** is the second stabilizer **S2**.

In embodiments, the adhesive composition is a polyolefin-based hot-melt adhesive composition, a rubber-based hot-melt adhesive composition, or a polyurethane-based hot-melt adhesive composition.

Particularly, the adhesive composition comprising the stabilizer **SB** may be selected from the polyolefin-based hot-melt adhesive, the rubber-based hot-melt adhesive, and the polyurethane-based hot-melt adhesive, as discussed above.

### Examples

The followings compounds and products shown in Table 1 were used in the examples.

**Table 1**

| | | |
|---|---|---|
| Stabilizer **S11** | Irganox^{®} 245, phenolic antioxidant | BASF |
| Stabilizer **S12** | Irganox^{®} 1010, sterically hindered phenolic antioxidant | BASF SE |
| Stabilizer **S21** | Irganox^{®} PS800 FL, dialkyl ester of thiodipropionic acid | BASF SE |
| Stabilizer **S22** | Irganox^{®} 1520, multifunctional liquid phenolic antioxidant | BASF SE |
| Stabilizer **S23** | Irganox^{®} 1035, sulfur containing phenolic antioxidant | BASF SE |
| SikaMelt^{®}-172 | Non-reactive polyolefin-based hot-melt adhesive | Sika Automotive DE GmbH |
| SikaMelt^{®}-230 | Thermoplastic rubber-based pressure sensitive hot-melt adhesive | Sika Automotive DE GmbH |
| SikaMelt^{®}-285 | Thermoplastic rubber-based pressure sensitive hot-melt adhesive | Sika Automotive DE GmbH |
| SikaMelt^{®}-890 | Reactive polyolefin-based hot-melt adhesive | Sika Automotive DE GmbH |
| SikaMelt^{®}-677 | Reactive polyurethane-based hot melt adhesive | Sika AG |

### Preparation of adhesive compositions

The reference and inventive adhesive compositions were prepared by mixing of the first and second stabilizer to the corresponding commercially available adhesive material in proportions as shown in Table 2.

### Measurement methods

The adhesive compositions were characterized using the following measurement methods.

### Storage stability of non-reactive polyolefin adhesive

Storage stability of the commercially available the non-reactive polyolefin-based hot-melt adhesive SikaMelt-172 with and without an inventive stabilizer package comprising the stabilizer S11 and S21 at a weight ratio of 1:1 was determined by measuring the viscosity at a temperature of 180 °C and a rotating speed of 5 revolutions per minute. The inventive adhesive formulations contained 0.6 wt.-% of the stabilizer package S.

The results of the viscosity measurements are shown in Table 2 below. It is evident that the adhesive formulation without the inventive stabilizer package exhibits a higher change in viscosity compared to the same adhesive with the inventive stabilizer package.

**Table 2**

| **Storage time [min]** | **SikaMelt-172** | | **SikaMelt-172 with stabilizer S** | |
|---|---|---|---|---|
| | Viscosity [mPa*s] | Change % | Viscosity [mPa*s] | Change % |
| 0 | 31900 | 0.0 | 23700 | 0.0 |
| 30 | 23850 | -25.2 | 22200 | -6.3 |
| 60 | 14950 | -53.1 | 16800 | -29.1 |
| 90 | | | 12000 | -49.4 |

### Storage stability of thermoplastic rubber-based adhesives

Storage stability of the commercially available thermoplastic rubber-based pressure sensitive hot-melt adhesives SikaMelt-230 and SikaMelt-285 with and without an inventive stabilizer package comprising the stabilizer S11 and S21 at a weight ratio of 1:1 was determined by measuring the viscosity at an elevated temperature. The inventive adhesive formulations contained 0.6 wt.-% of the stabilizer package S.

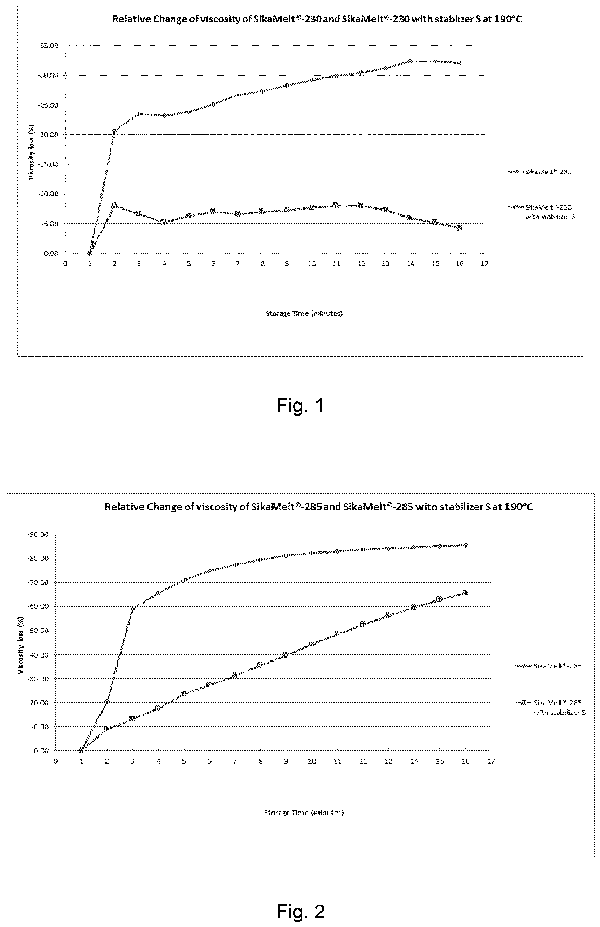

Figures 1 and 2 show the relative change in viscosity during a storage period of 16 minutes at 190 °C. It is evident that the adhesive formulations without the inventive stabilizer package exhibit a higher change in viscosity compared to the same adhesives with the stabilizer package ("with stabilizer S").

### Roller coating stability of the reactive polyolefin-based adhesive

Roller coating stability of a commercially available reactive polyolefin-based hot-melt adhesive SikaMelt-890 with and without an inventive stabilizer package (S' or S") was determined by measuring the increase in viscosity in an open roller over a specific period of time.

The stabilizer package S' contained the stabilizer S11 and S21 at a weight ratio of 1:1 and the stabilizer package S" contained the stabilizer S12 and S21 at a weight ratio of 1:1. The inventive adhesive formulations contained 0.6 wt.-% of the stabilizer package S' or S".

The stability measurement was conducted by providing the tested hot-melt adhesive in a roller coater and determining the viscosity of the material after every 10 minutes. The stringing behavior of the material was evaluated by laminating a TPO-foil with the tested adhesive. The measurement was ended when the tested adhesive showed significant formation of agglomerates and/or stringing behavior.

The roller coating process was conducted using the following process parameters:
Roller temperature: 165 °C
Application weight: ca. 100 g/m²
Application roller speed: 5 m/min
Transfer roller speed: 0.5 m/min
Metering gap = 0.4 mm

The results of the roller coating stability measurements are shown in Table 3 below. It is evident that the comparative adhesive formulation without the inventive stabilizer package exhibits loses its stability after 10 minutes of roller coater processing whereas the adhesive formulations with the inventive stabilizer package remain stable a significant longer time.

**Table 3**

| **Roller coater processing time [min]** | **SikaMelt-890** | **SikaMelt-890 with stabilizer S'** | **SikaMelt-890 with stabilizer S"** |
|---|---|---|---|
| 0 | Ok | Ok | Ok |
| 10 | Not ok | Ok | Ok |
| 20 | | Ok | Ok |
| 30 | | Ok | Ok |
| 35 | | Ok | Ok |
| 40 | | Ok | Not ok |

### Viscosity at 130 °C of reactive polyurethane-based adhesives

The sample adhesive composition provided in a sealed tube was preheated in an oven at a temperature of 130 °C for a time period of 30 minutes. After the heating, a sample of 12.3 g of the adhesive composition was weighted and placed in a disposable sleeve to a viscometer. The viscosity was measured at temperature of 130 °C at different rotating speeds (1, 2.5, 5, and 10) revolutions per minute using a Brookfield DV-2 viscometer with a spindle No. 27 equipped with a Thermosel system. The values obtained with 20 minutes of tempering at the measurement temperature and five minutes of measurement were recorded as representative viscosities and shown in Table 4.

### Green (tensile lap-shear) strength of reactive polyurethane-based adhesives

The adhesive sample was kept in an oven at 130 °C for more than 30 min to ensure the adhesive was provided in a molten state. After the heating, a sample of the molten adhesive was applied on the surface of a wood substrate having dimensions of 9 cm x 2 cm x 5 mm. The adhesive was applied as a coating film having dimensions of 2.5 cm x 1 cm and a thickness of 1 mm.

Immediately after the application of the adhesive, a second wood substrate having same dimensions as the first wood substrate was positioned over the first wood substrate along the edge of the adhesive film to form a test composite element. The second wood substrate was pressed firmly against the first wood substrate to remove air from adhesive bond. A weigh of 150 g was placed on the top surface of the second wood substrate. Any adhesive squeezed out from the joint was trimmed off with a knife. Lap shear strength (LSS) of the test composite element was measured according to EN 1465 standard using a material testing apparatus (Zwick Z 020) and a test speed 10 mm/min.

The lap shear strengths were measured with test composite elements, which had been stored for different periods (3, 6, 10, 20, and 30 minutes) after the bonding of the first wood substrate with the second substrate to investigate the initial (green) adhesive bond strength obtained with the tested adhesive composition.

The lap shear strength values for each adhesive composition presented in Table 4 have been obtained as an average of three measurements conducted with identical test composite elements prepared by using the same adhesive composition.

**Table 4**

| **Composition [wt.-%]** | **Ref-1** | **Ref-2** | **Ex-1** | **Ref-3** | **Ex-2** | **Ex-3** | **Ref-4** |
|---|---|---|---|---|---|---|---|
| Stabilizer **S11** | | 0.3 | 0.3 | | | 0.3 | |
| Stabilizer **S12** | | | | | 0.3 | | 0.3 |
| Stabilizer **S21** | | | | 0.3 | 0.3 | 0.3 | |
| Stabilizer **S22** | | 0.3 | | | | | 0.3 |
| Stabilizer **S23** | | | 0.3 | 0.3 | | | |
| SikaMelt^{®}-677 | 100.00 | 99.4 | 99.4 | 99.4 | 99.4 | 99.4 | 99.4 |

| **Measured properties** | | | | | | | |
|---|---|---|---|---|---|---|---|
| Viscosity @130 °C | | | | | | | |
| 1 rpm [mPa*s] | 4600 | 9000 | 5500 | 8000 | 4000 | 4750 | 8750 |
| 2.5 rpm [mPa*s] | 4500 | 8800 | 5900 | 8000 | 4800 | 4500 | 7799 |
| 5 rpm [mPa*s] | 4550 | 8650 | 5650 | 7900 | 4000 | 4400 | 7650 |
| 10 rpm [mPa*s] | 4600 | 8625 | 5800 | 7875 | 4000 | 4375 | 7650 |

| Green strength (LSS) | | | | | | | |
|---|---|---|---|---|---|---|---|
| 3 min [MPa] | 0.02 | 0.01 | 0.02 | 0.01 | 0.03 | 0.02 | 0.02 |
| 6 min [MPa] | 0.1 | 0.05 | 0.09 | 0.08 | 0.12 | 0.11 | 0.07 |
| 10 min [MPa] | 0.38 | 0.15 | 0.29 | 0.12 | 0.4 | 0.42 | 0.19 |
| 20 min [MPa] | 0.56 | 0.26 | 0.48 | 0.28 | 0.55 | 0.53 | 0.34 |
| 30 min [MPa] | 0.67 | 0.38 | 0.59 | 0.37 | 0.69 | 0.67 | 0.47 |

## Claims

1. An adhesive composition comprising:
a) At least one polymer **P,**
b) A stabilizer **S** comprising:
b1) At least one first stabilizer **S1** and
b2) At least one second stabilizer **S2,**
wherein the first stabilizer **S1** is a non-sulfur containing compound having at least two phenolic groups and the second stabilizer **S2** is a sulfur containing compound.

2. The adhesive composition according to claim 1, wherein the first stabilizer **S1** has a molecular weight determined by gel permeation chromatography (GPC) using polystyrene as standard of not more than 2500 g/mol, preferably not more than 2000 g/mol, particularly 150 - 2000 g/mol, especially 250 - 1500 g/mol.

3. The adhesive composition according to claim 1 or 2, wherein the second stabilizer **S2** has a molecular weight determined by gel permeation chromatography (GPC) using polystyrene as standard of not more than 2000 g/mol, preferably not more than 1500 g/mol, particularly 100 - 1500 g/mol, especially 200 - 1000 g/mol.

4. The adhesive composition according to any one of previous claims, wherein the first stabilizer **S1** is a non-sulfur containing ester type compound having at least two phenolic groups and/or the second stabilizer **S2** is a sulfur containing ester type compound.

5. The adhesive composition according to any one of previous claims, wherein the first stabilizer **S1** selected from ethylenebis(oxyethylene) bis[3-(5-tert-butyl-4-hydroxy-m-tolyl)propionate] and pentaerythritol tetrakis(3-(3,5-di-tert-butyl-4-hydroxyphenyl)propionate).

6. The adhesive composition according to any one of previous claims, wherein the second stabilizer **S2** is thiodiethylene bis[3-(3,5-di-tert.-butyl-4-hydroxyphenyl)propionate] or a compound of formula (I) 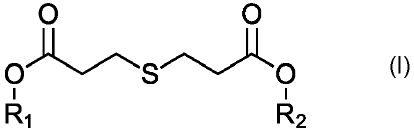 where R₁ and R₂ are independently of each other linear or branched C₁₀ to C₂₂ alkyl groups, preferably linear or branched C₁₂ to C₂₀ alkyl groups.

7. The adhesive composition according to any one of previous claims, wherein the compound of formula (I) is selected from dilauryl 3,3'-thiodipropionate, distearyl thiodipropionate, dimyristyl thiodipropionate, and ditridecyl thiodipropionate, especially dilauryl 3,3'-thiodipropionate.

8. The adhesive composition according to any one of previous claims, wherein weight ratio of the at least one first stabilizer **S1** to the at least one second stabilizer **S2** is in the range of from 10:1 to 10:1, preferably from 5:1 to 1:5.

9. The adhesive composition according to any one of previous claims, wherein the adhesive composition is a hot-melt adhesive, preferably having a softening point determined by the Ring & Ball method as defined in ISO 4625-1:2020 standard of at or above 85 °C, preferably at or above 105 °C.

10. The adhesive composition according to any one of previous claims, wherein the adhesive composition is a polyolefin-based hot-melt adhesive, a rubber-based hot-melt adhesive, or a polyurethane-based hot-melt adhesive.

11. The adhesive composition according to any one of previous claims, wherein the adhesive composition is a polyolefin-based hot-melt adhesive and the at least one polymer **P** is selected from at 25 °C solid non-functionalized and functionalized polyolefins, particularly from at 25 °C solid non-functionalized and functionalized poly-α-olefins, especially from at 25 °C solid non-functionalized and functionalized amorphous poly-α-olefins (APAOs).

12. The adhesive composition according to any one of claims 1-10, wherein the adhesive composition is a rubber-based hot-melt adhesive and the at least one polymer **P** is a styrene block copolymer, preferably selected from styrene-isoprene diblock (SI) copolymers, styrene-isoprene-styrene triblock (SIS) copolymers, styrene-butadiene diblock (SB) copolymers, styrene-butadiene-styrene triblock (SBS) copolymers, styrene-isoprene-butadiene-styrene block copolymers (SIBS), styrene-ethylene-butadiene-styrene (SEBS) block copolymers, styrene-ethylene-propylene-styrene block (SEPS) copolymers, and styrene-ethylene-ethylene-butylene-styrene copolymers (SEEPS).

13. The adhesive composition according to any one of claims 1-10, wherein the adhesive composition is a polyurethane-based hot-melt adhesive and the at least one polymer **P** is an isocyanate- and/or silane-functionalized polyurethane polymer.

14. Use of the adhesive composition according to any one of previous claims as an automotive assembly adhesive, laminating adhesive, or as an adhesive for the building of sandwich elements.

15. A method for adhesively bonding a first substrate to a second substrate, the method comprising steps of:
I) Heating an adhesive composition according to any one of claims 1-13 to provide a melted adhesive composition,
II) Applying the melted adhesive composition to a surface of the first substrate,
III) Contacting the applied adhesive with a surface of the second substrate, and
IV) Physically curing the applied adhesive by cooling and/or chemically curing the applied adhesive with water, preferably with atmospheric moisture.

16. Use of a stabilizer **SB** for improving the heat stability of an adhesive composition, preferably a hot-melt adhesive composition, wherein the stabilizer **SB** comprises:
b1) At least one first stabilizer **SB1** and
b2) At least one second stabilizer **SB2,**
wherein the first stabilizer **SB1** is a non-sulfur containing compound having at least two phenolic groups and the second stabilizer **SB2** is a sulfur containing compound.

17. Use according to claim 16, wherein the first stabilizer **SB1** is the first stabilizer **S1** as defined in any one of claims 1-13 and/or the second stabilizer **SB2** is the second stabilizer **S2** as defined in any one of claims 1-13.
